# EUROPÄISCHE PATENTSCHRIFT

(11) **EP 0 610 867 B1**
(45) Veröffentlichungstag und Bekanntmachung des Hinweises auf die Patenterteilung: **23.10.1996**
(21) Anmeldenummer: 94101842.6
(22) Anmeldetag: 08.02.1994
(51) Int. Cl.: B29C 73/10, B29C 73/26, B29C 73/30, B29D 31/00, B29K 21/00, B29L 31/32

(54) **Vorrichtung zur Wiederherstellung einer beschädigten Beschichtung einer Walze**
Device for repairing a damaged covering of a roll
Dispositif pour la réparation d'un revêtement endommagé d'un rouleau

(30) Priorität: 10.02.1993 DE 9301808 U
(43) Veröffentlichungstag der Anmeldung: 17.08.1994
(73) Patentinhaber: Kalwar, Klaus, D-33803 Steinhagen (DE)
(72) Erfinder: Kalwar, Klaus, D-33803 Steinhagen (DE)
(74) Vertreter: Stracke, Alexander, Dipl.-Ing.

(56) Entgegenhaltungen:
- EP-A- 0 193 446
- EP-A- 0 436 033
- EP-A- 0 480 552
- DE-A- 2 944 199
- DE-A- 4 019 744
- US-A- 4 193 178
- DATABASE WPI Section Ch, Week 9229, Derwent Publications Ltd., London, GB; Class A, AN 92-240264 C29! & SU-A-1 669 752 (T. T. KOTOVA) 15. August 1991
- DATABASE WPI Section Ch, Week 9330, Derwent Publications Ltd., London, GB; Class AGS, AN 93-237402 C30! & JP-A-5 158 368 (ARAI SEISAKUSHO K.K.) 25. Juni 1993
- DATABASE WPI Section Ch, Week 8802, Derwent Publications Ltd., London, GB; Class AX, AN 88-007078 C02! & AU-A-8 772 924 (ELITE CHEM IND. PTY.) 19. November 1987

## Beschreibung

Die vorliegende Erfindung betrifft eine Vorrichtung zur Wiederherstellung einer beschädigten Beschichtung einer Walze.

Derartige Walzen, deren jeweilige Beschichtung in der Hauptsache aus Gummi besteht, finden in vielen Bereichen Verwendung.
Durch arbeitsbedingten Verschleiß ist in zeitlichen Abständen eine neue Beschichtung der Walzen erforderlich, wozu diese aus der entsprechenden Maschine entnommen werden müssen.

Es können jedoch auch, durch vielerlei Gründe bedingt, partielle Beschädidigungen der Beschichtung auftreten, die, da die Beschichtung im übrigen noch den Anforderungen entspricht, keine Neubeschichtung erforderlich machen, sondern lediglich ein Ausbessern der beschädigten Bereiche.

Zwar ist es bekannt, die schadhaften Stellen in der form auszubessern, daß ein Flicken eingesetzt und mit dem Walzenkörper durch Kaltvulkanisation verbunden wird, jedoch ist die Oberflächenbeschaffenheit der Walze nach dieser Reparatur unbefriedigend, wobei die mangelhafte Oberflächenbeschaffenheit zu Qualitätseinbußen bei der durch die Walze zu transportierenden Warenbahn führt.

Insbesondere bei Walzenelektroden, die Bestandteil einer Vorrichtung zur Koronabehandlung sind und mit deren Hilfe eine Koronaentladung an durchlaufenden Warenbahnen durchgeführt wird, ergeben sich erhebliche Qualitätseinbußen auf der Warenbahnoberfläche, da eine gleichmäßige Koronaentladung durch die unterschiedlich aufgebrachte Beschichtung, nämlich einerseits die ursprüngliche, durch Heißvulkanisation mit dem Walzenkörper verbundene und die neue, in Form eines Flickens und mittels Kaltverklebens oder Kaltvulkanisierens aufgebrachte, nicht möglich ist.

Um diese Nachteile zu vermeiden, werden daher die beschädigten Walzen bisher vollständig ausgewechselt und insgesamt neu beschichtet, siehe z.B. DE-A-29 44 199.

Naturgemäß ist dies mit einem erheblichen Kostenaufwand verbunden. Insbesondere beim Auswechseln der Walzen in Folienreckanlagen oder solchen, die in der Papierindustrie eingesetzt werden und die sehr groß und schwer sind, ergeben sich erhebliche Nachteile, da dieses Auswechseln nur mit einem größeren Aufwand durchführbar ist.

Der vorliegenden Erfindung liegt daher die Aufgabe zugrunde, eine Vorrichtung zur Wiederherstellung einer beschädigten Beschichtung einer Walze so zu gestalten, daß eine Reparatur der Walzenbeschichtung ohne Qualitätsminderung der Gesamtoberfläche möglich wird und daß eine Wiederherstellung der beschädigten Walze wirtschaftlicher durchführbar ist.

Diese Aufgabe wird erfindungsgemäß durch die im Anspruch 1 genannten Merkmale gelöst.

Mit Hilfe der so ausgestalteten Vorrichtung ist es nun möglich, eine in ihrer Gesamtheit gleiche Oberfläche sowohl hinsichtlich ihres Verhaltens bei Beanspruchung als auch hinsichtlich ihrer Güte zu erhalten.

Prinzipiell wird der Flicken nun auf den Walzenkörper so aufgebracht wie die ursprüngliche Beschichtung. Durch das Heißvulkanisieren des Flickens kann auf Kleber oder dergleichen verzichtet werden, die ein gegenüber der übrigen Beschichtung unterschiedliches Verhalten bei Beanspruchung hätten.

Die mechanische Bearbeitung der beschädigten Stelle zum Zwecke der Entfernung der Beschichtungsreste in diesem Bereich kann beispielsweise durch Abschleifen, Fräsen oder andere geeignete Bearbeitungsmethoden erfolgen. Zum Reinigen des so bearbeiteten Bereiches ist die Verwendung eines Kaltreinigers denkbar. Als besonders vorteilhaft hat sich jedoch herausgestellt, eine Reinigung mittels einer Koronaentladung vorzunehmen, wobei durch diese Koronaentladung auf dem Walzenkörper Haftzentren entstehen, die den Vulkanisationsvorgang positiv beeinflussen und eine erhöhte Haftung des aufgebrachten Flickens bewirken.

Neben der gegenüber einer Neubeschichtung gleichwertigen Oberflächenbeschaffenheit der Beschichtung nach einer mit der neuen Vorrichtung durchgeführten Reparatur ist als besonders vorteilhaft die sich ergebende Wirtschaftlichkeit gegenüber dem Stand der Technik hervorzuheben.
So können beispielsweise auch die in Folienreckanlagen oder in der Papierindustrie eingesetzten schweren Walzen direkt an Ort und Stelle wiederhergestellt werden, ohne daß die Walzen ausgebaut werden müssen.

Als besonders wirtschaftlich hat sich dabei die Installation der Bearbeitungsstation in einer Behandlungsanlage zur Koronabehandlung einer Warenbahn erwiesen, so daß die Bearbeitungsstation integraler Bestandteil dieser Behandlungsanlage ist. Bei Bedarf kann also sofort eine Reparatur der beschädigten Walzenbeschichtung vorgenommen werden, wobei der gesamte Reparaturvorgang, also die mechanische Bearbeitung zu Zwecke der Entfernung der beschädigten Beschichtung, das Reinigen des dann freien Bereiches, das Heißvulkanisieren des in den freien Bereich eingelegten Flickens, die anschließende mechanische Bearbeitung, mit der die ausgebesserte Stelle der Beschichtung im übrigen angepaßt wird, und die abschließende Koronabehandlung zur Angleichung des Adhäsionsverhaltens des Flickens an den benachbarten Bereich, rechnergestützt und programmgesteuert erfolgen kann. Die auf die jeweilige Behandlungsanlage abgestimmten Parameter zur Wiederherstellung der beschädigten Beschichtung werden zweckmäßigerweise im Rechner gespeichert.

Im übrigen kann in diesem Fall die Koronaelektrode, die einerseits der Reinigung des freien Bereiches und andererseits der Koronabehandlung der wiederhergestellten Walzenbeschichtung dient, an den Generator der Behandlungsanlage angeschlossen werden, was naturgemäß die Herstellungskosten für die Vorrichtung verringert.

Die Heißvulkanisation des aufgebrachten Flickens erfolgt durch eine umgelegte beheizbare Manschette.

Sinnvoll ist es, den Flicken, der in etwa dem bearbeiteten Reparaturbereich entspricht, geringfüg in seinen äußeren Abmaßen größer zu halten, so daß dieser in die Bearbeitungsfläche eingequetscht wird. Durch die Heißvulkanisation entsteht eine innige Verbindung mit der anliegenden ursprünglichen Beschichtung, wobei die entstehenden Wulstränder durch das anschließende mechanische Bearbeiten, das gleichfalls durch Fräsen, Schleifen o.dgl. erfolgen kann, so weit abgetragen werden, daß ein gleichmäßiger Durchmesser der Walze insgesamte gewährleistet ist.

Außer der Möglichkeit, eine Bearbeitungsstation in einer Behandlungsanlage zur Koronabehandlung einer Warenbahn zu installieren, ist es auch denkbar, eine solche Bearbeitungsstation in anderen Behandlungsanlagen oder in mit Walzen ausgerüsteten Maschinen, wie beispielsweise Druckmaschinen, Maschinen zur Papierherstellung o.dgl. vorzusehen.

Dabei kann im Bedarfsfall jeder beschichteten Walze eine Bearbeitungsstation zugeordnet sein. Es ist aber auch möglich, eine Bearbeitungsstation für mehrere Walzen zu installieren, die dann bei entsprechender, vorrichtungsmäßiger Ausgestaltung von einer Walze zur anderen verfahrbar ist.

In besonders vorteilhafter Weise können die zum Betrieb der Behandlungsanlage notwendigen Aggregate, wie Antriebe oder ähnliches auch für den Betrieb der Bearbeitungsstation verwendet werden.

Bei entsprechender Beschaffenheit des Rechnerprogramms kann der Betrieb der Behandlungsanlage und der Bearbeitungsstation in Abhängigkeit voneinander gesteuert werden, d.h. bei einer selbsttätigen Erkennung der Notwendigkeit einer Reparatur der Beschichtung erfolgt eine automatische Steuerung der Bearbeitung, so daß ohne Zeitverzögerung und ohne Personaleingriff eine selbsttätige Wiederherstellung der beschädigten Beschichtung durchgeführt wird. Dies kann von erheblichem wirtschaftlichem Vorteil insbesondere dann sein, wenn die Bearbeitungsstation in einer Behandlungsanlage zum Einsatz kommt, deren Betriebskosten sehr hoch sind.

Die Beschichtung der Walze kann neben den erwähnten, durch Heißvulkanisation aufgebrachten Beschichtungsmaterialien wie Gummi o.dgl., auch aus einer Keramikmasse bestehen, die zum Zwecke der Reparatur in pastösem Zustand aufgebracht wird und im Sinne der Erfindung zu bearbeiten ist. Durch Zufuhr von Wärme und unter Aufbringung von Druck, also durch Heißverpressung, erfolgt eine entsprechende Aushärtung der Keramikmasse, an die sich die Endbearbeitung anschließt.

Weitere vorteilhafte Ausgestaltungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1 bis 6: eine Vorrichtung zur Durchführung des Verfahrens in einer schematischen Vorderansicht bei jeweils unterschiedlichen Verfahrensschritten,
- Fig. 7: einen schematischen Querschnitt durch die Vorrichtung gemäß der Linie VII-VII in Fig. 1,
- Fig. 8 und 9: schematisch dargestellt das Ausgangsmaterial für einen Flicken sowie einen Flicken in zugeschnittenem Zustand,
- Fig. 10: einen weiteren, schematisch dargestellten Querschnitt durch die Vorrichtung gemäß der Linie X-X in Fig. 4,
- Fig. 11: ein weiteres Ausführungsbeispiel der Vorrichtung in einer schematischen Vorderansicht,
- Fig. 12 und 13: Die Vorrichtung gemäß der Fig. 11 in jeweils einer schematisch dargestellten Seitenansicht in unterschiedlichen Arbeitsstellungen der Vorrichtung,
- Fig. 14 bis 16: Einzelheiten der Vorrichtung in jeweils einer Vorderansicht,
- Fig. 17: eine Seitenansicht der Einzelheit nach Fig. 16,
- Fig. 18: einen Querschnitt durch ein weiteres Ausführungsbeispiel der Vorrichtung gemäß der Linie X-X in Fig. 4.

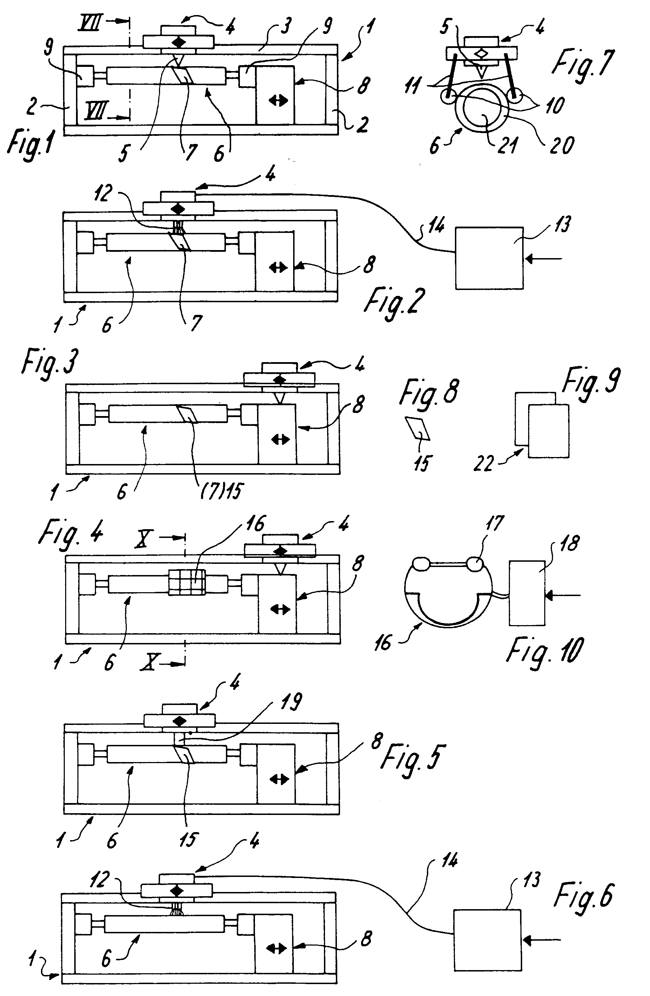

Eine in den Fig. 1 bis 6 dargestellte Vorrichtung zur Wiederherstellung einer beschädigten, durch Heißvulkanisation auf einen Walzenkörper 21 aufgebrachten Beschichtung 20 einer Walze 6 besteht aus einem Gestell 1, das Seitenteile 2 sowie diese miteinander verbundende Traversen 3 aufweist. Weiter ist ein Lagerteil 8 vorgesehen, das mit Lagern 9 versehen ist, in denen die zu bearbeitetende Walze 6 eingehängt ist. Dabei ist das Lagerteil 8 in Achsrichtung der Walze 6 verfahrbar. Auf den Traversen 3, oberhalb der Walzen 6 ist eine Bearbeitungsstation 4 angeordnet, die ebenfalls achsparallel zur Walze 6 verfahrbar ist und in der ein quer zur Achsrichtung verstellbares Werkzeug 5, beispielsweise ein Fräs- oder Schleifwerkzeug festgesetzt ist.

Die Walze 6 weist eine Schadstelle 7 auf, die es mit Hilfe der erfindungsgemäßen Vorrichtung gilt zu beseitigen, so daß die Walze 6 wieder uneingeschränkt gebrauchsfähig wird.

Mit Hilfe des Werkzeuges 5 wird die Schadstelle 7 bearbeitet, wobei durch die Vertikal- und/oder Horizontalbewegung des Werkzeuges 5 bzw. der Bearbeitungstation 4 eine konturengenaue Bearbeitung der Schadstelle 7 möglich ist. Zweckmäßigerweise wird die auf den Walzenkörper 21 (Fig. 7) aufgebrachte Beschichtung 20 im Bereich der Schadestelle 7 bis auf den Walzenkörper 21 entfernt. In den überwiegenden Fällen besteht die Beschichtung 20 aus Gummi. Es sind jedoch auch andere geeignete, auf den Walzenkörper heiß aufvulkanisierte oder heißverpreßte Materialien denkbar, beispielsweise Keramik.
Wie die Fig. 7 zeigt, kann die Bearbeitungsstation an Stützleisten 11 festgelegt sein, die sich wiederum mittels Stützrollen 10 an der Oberfläche der Walze 6 abstützen.

Nach der in der Fig. 1 angedeuteten mechanischen Bearbeitung der Schadstelle 7 erfolgt eine sinnbildlich in der Fig. 2 gezeigte Reinigung der bearbeiteten Schadstelle 7.

In den gezeigten Ausführungsbeispielen erfolgt die Reinigung mittels einer Koronaentladung, die durch eine Koronaelektrode 12 erzeugt wird. Diese wird in der Bearbeitungsstation 4 gehalten und ist über eine elektrische Leitung 14 mit einem Hochspannung erzeugenden Generator 13 verbunden.

Neben der guten Reinigungswirkung durch die Koronaentladung werden auch im Grund der bearbeiteten Schadstelle 7 Haftungsnester erzeugt, die die Haftung eines nachfolgend aufzuringenden Flickens 15 begünstigen. Anstelle der Reinigung mittels einer Koronaentladung ist auch die Reinigung einen Kaltreiniger denkbar.

Aus einem in der Fig. 9 gezeigten Gummifell 22 wurde etwa dem Konturenverlauf der Schadstelle 7 entsprechend ein Flicken 14 gefertigt, der entsprechend der Fig. 3 in die Schadstelle 7 eingefügt wird.

Danach erfolgt gemäß der Fig. 4 die Heißvulkanisation des Flickens 15. Dazu wird eine Heizmanschette 16 im Bereich des Flickens 15 um die Walze 6 gelegt und mittels ein Spannbügels 17 fest angepreßt. Mit Hilfe eines Netzteiles 18 wird die Heizmanschette 16 bis auf Vulkanisationstemperatur aufgeheizt.

Nach der Heißvulkanisation erfolgt eine weitere mechanische Bearbeitung, im vorliegenden Ausführungsbeispiel mittels eines Schleifwerkzeuges 19, das in der Bearbeitungsstation festgelegt ist und mit dem eine solche Bearbeitung der reparierten Schadstelle erfolgt, daß gegenüber dem benachbarten Oberflächenbereich in der intakten Beschichtung 20 kein qualitätsmindernder Unterschied besteht.

Unter bestimmten Umständen kann es sinnvoll sein, den wiederhergestellten Bereich der Walze 6 einer Koronabehandlung zu unterziehen, was, ebenso wie bei der Reinigung, mittels einer Koronaentladung durch eine Koronaelektrode 12 erfolgt. Hierdurch werden zwischen der ursprünglichen Beschichtung der Walze 6, also dem Altgummigelag und dem durch den Flicken 15 gebildeten Neugummigelag hinsichtlich einer Oberflächenadhäsion gleiche Verhältnisse hergestellt.

Anstelle der in den Fig. 1 bis 6 dargestellten und beschriebenen Vorrichtung, die im wesentlichen dazu dient, aus einer Maschine entnommene Walzen 6 extern wiederherzustellen, besteht auch die Möglichkeit, beschädigte Walzen stationär zu reparieren, wobei dann die Bearbeitungsstation 4 in dem in der Fig. 7 dargestellten Sinn auf die Walze 6, wie erwähnt, nicht demontiert ist, aufgesetzt wird. Dies bietet sich insbesondere bei großen und schweren Walzen an.

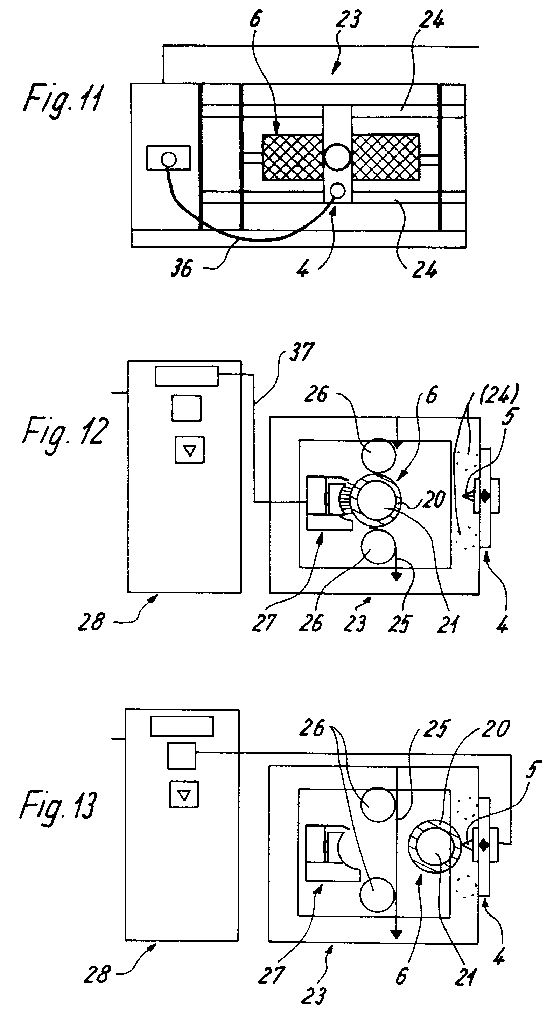

In den Fig. 11 bis 13 ist die Anordnung der Bearbeitungsstation 4 in einer Behandlungsanlage 23 dargestellt, in der eine Warenbahn 25 mittels einer an einen Hochspannung erzeugenden Generator 28 angeschlossenen Elektrode 27 koronabehandelt wird. Dabei wird die Warenbahn 25 über Leitwalzen 26 und die Walze 6 geführt. Die Beschichtung 20 der Walze 6 bildet das Dielektrikum, das im Zusammenwirken mit der Elektrode 27 die Koronabehandlung ermöglicht.

Die Bearbeitungsstation 4 ist auf ortsfesten Führungen 24 der Behandlungsanlage 23 in Längsachsrichtung der Walze 6 verschiebbar gelagert, wobei sich der Verschiebeweg zumindest über die gesamte Länge der Beschichtung 20 erstreckt.

Während in der Fig. 12 die Behandlungsanlage 23 in Funktion dargestellt ist, in der die Warenbahn 25 einer Koronabehandlung unterzogen wird, und die Bearbeitungsstation 4 außer Eingriffs ist, ist in der Fig. 13 eine Außerfunktionsstellung der Elektrode 27 gezeigt, in der die Beschichtung 20 der Walze 6 durch die Bearbeitungsstation 4 einer Reparatur unterzogen werden soll.

Dabei ist zu erkennen, daß die Bearbeitungsstation 4 hinsichtlich ihrer Energieversorgung über die Energieversorgung der Behandlungsanlage 23 gespeist wird. Dies kann beispielsweise über eine Leitung 36 erfolgen.

Eine in der Bearbeitungsstation vorgesehene, nicht in ihrer Einzelheit dargestellte Koronaelektrode ist mit dem Generator 28 verbunden, so daß dieser sowohl die Elektrode 27 als auch die genannte Koronaelektrode der Bearbeitungsstation 4 versorgt.
Zur Optimierung der Bearbeitung der beschädigten Walze 6 kann ein Rechner angeschlossen sein, der beispielsweise die Heißvulkanisation steuert, wobei als Parameter Zeit, Druck und Temperatur entsprechend den Anforderungen steuerbar sind.

Wie bereits zu der Fig. 7 beschrieben, sind zur Bearbeitungsorptimierung Stützrollen 10 vorgesehen, die sich an der Walze 6 abstützen.

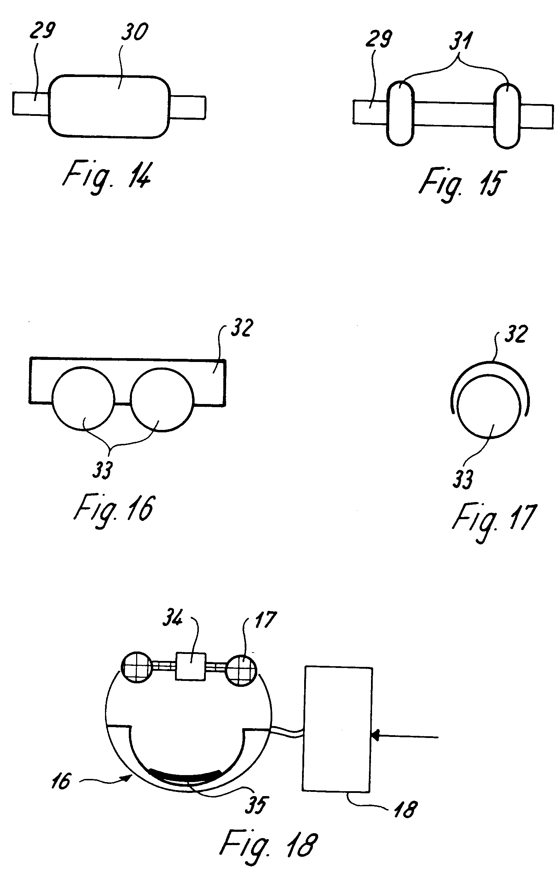

In den Fig. 14 bis 17 sind besondere Ausgestaltungen dieser Stützrollen dargestellt. So werden diese entsprechend der Fig. 14 aus Stützwalzen 30 gebildet, von denen jede auf einer Achse 29 gelagert ist. Diese Stützwalze 30 ermöglicht bei geringem Flächendruck auf die Walzenoberfläche gute radiale Bewegungen.
Die Fig. 15 zeigt auf der Achse 29 angeordnete Stützrollenteile 31, die gute radiale und leicht eingeschränkte axiale Bewegungen auf der Walzenoberfläche ermöglichen. In den Fig. 16 und 17 sind als Stützrollen ausgebildete Stützkugeln 33 erkennbar, die in einer Halterung 32 gelagert sind und die eine optimale radiale und axiale Bewegung sowie je nach Größe einen geringen Flächendruck auf die Walzenoberfläche ermöglichen.

Eine Weiterentwicklung der in der Fig. 10 gezeigten Heizmanschette 16 ist in der Fig. 18 dargestellt, wobei der Spannbügel 17 über ein pneumatisch oder hydraulisch druckregelfähiges, betätigbares Stellglied, das im übrigen gleichfalls rechnergesteuert sein kann, spannbar ist.

Zur Anpassung an unterschiedliche Walzendurchmesser können in die Heizmanschette 16 Einlagen 35 eingebracht werden.

Um die Qualität der Reparaturen sichern zu können, müssen geeignete Meßverfahren und Meßmittel vorgesehen sein, die beispielsweise die Stoffart, die Stoffhärte oder die Stoffoberflächeneigenschaft der Beschichtung 20 berücksichtigen. Diese Werte werden dann an den Rechner übermittelt und entsprechend umgesetzt, so daß z.B. über die Steuerung des Stellgliedes 34 ein genau definierter Druck bzw. eine genau definierte Temperatur den Vulkanisationsprozeß oder Heißpreßprozeß optimiert.

Das Vulkanisations-Rohmaterial, das der Beschichtung 20 entspricht, wird entsprechend den gegebenen Anforderungen in verschiedenen Formen, wie kreisförmigen, quadratischen, rechteckigen oder als Band oder Schnur bereitgestellt, wobei sich eine Vakuum-Verpackung der Rohmaterialien als sinnvoll herausgestellt hat. Ähnliches gilt für vorbereitete keramische Reparaturmassen.

Die Bearbeitungsstation 4 kann mit einer nicht dargestellten Vakuumglocke versehen sein, die an einer Vakuumpumpe angeschlossen ist und den aus einer pastösen Masse, beispielsweise Keramik, gebildeten Flicken insgesamt abdeckt und evakuiert, so daß eine Fehlreaktion des reparierten Bereiches während des Betriebes durch ansonsten vorhandene Lufteinschlüsse vermieden wird.Zweckmäßigerweise erfolgt die Evakuierung vor einem Aushärten des Flickens.

### Bezugszeichen

- 1: Gestell
- 2: Seitenteil
- 3: Traverse
- 4: Bearbeitungsstation
- 5: Werkzeug
- 6: Walze
- 7: Schadstelle
- 8: Lagerteil
- 9: Lager
- 10: Stützrolle
- 11: Stützleiste
- 12: Koronaelektrode
- 13: Generator
- 14: Leitung
- 15: Flicken
- 16: Heizmanschette
- 17: Spannbügel
- 18: Netzteil
- 19: Schleifwerkzeug
- 20: Beshcichtung
- 21: Walzenkörper
- 22: Gummifeld
- 23: Behandlungsanlage
- 24: Führung
- 25: Warenbahn
- 26: Leitwalze
- 27: Elektrode
- 28: Generator
- 29: Achse
- 30: Stützwalze
- 31: Stützrollenteil
- 32: Halterung
- 33: Stützkugel
- 34: Stellglied
- 35: Einlage
- 36: Leitung

## Patentansprüche

1. Vorrichtung zur Wiederherstellung einer beschädigten, durch Heißvulkanisation auf einen Walzenkörper aufgebrachten Beschichtung einer Walze, wobei ein die Schadstelle im wesentlichen ausfüllender Flicken mit dem Walzenkörper verbindbar ist, wobei eine Bearbeitungsstation (4) vorgesehen ist, die Mittel zur mechanischen Entfernung der Schadstelle (7), zur Reinigung des dann freien Schadstellenbereichs, zur Verbindung des in den freien Bereich eingelegten Flickens (15) mit der benachbarten Beschichtung (20) und dem Walzenkörper (21) mittels Heißvulkanisation oder Heißverpressung sowie zur mechanischen Bearbeitung der Beschichtung (20) zum Zwecke der Anpassung an Abmaß und Oberflächenbeschaffenheit der Beschichtung (20) im übrigen aufweist.

2. Vorrichtung nach Anspruch 1, dadurch gekennzeichnet, daß einer Behandlungsanlage zur Bearbeitung von Warenbahnen (25), vorzugsweise jeder Walze der Behandlungsanlage (23), mindestens eine Bearbeitungsstation (4) zugeordnet ist.

3. Vorrichtung nach Anspruch 1, dadurch gekennzeichnet, daß eine Koronaelektrode vorgesehen ist, die mit einem, eine Hochspannung erzeugenden Generator (28) verbunden ist und mit der der freie und/oder wiederhergestellte Bereich einschließlich des benachbarten Bereichs der übrigen Beschichtung (20) behandelbar ist.

4. Vorrichtung nach Anspruch 2, dadurch gekennzeichnet, daß die Bearbeitungsstation (4) in einer Behandlungsanlage (23) zur Koronabehandlung einer Warenbahn (25) installiert ist.

5. Vorrichtung nach Anspruch 4, dadurch gekennzeichnet, daß die Bearbeitungsstation (4) auf ortsfesten Führungen (24) verschiebbar gelagert ist.

6. Vorrichtung nach Anspruch 3 oder 4, dadurch gekennzeichnet, daß die Koronaelektrode an den Generator (28) der Behandlungsanlage (23) anschließbar ist.

7. Vorrichtung nach Anspruch 1, bei der die Bearbeitungsstation (4) mit einer Heizmanschette versehen ist, die im Bereich des Flickens (15) um die Walze (6) legbar ist, dadurch gekennzeichnet, daß in der Heizmanschette (16) Einlagen (35) vorgesehen sind.

8. Vorrichtung nach Anspruch (7), bei der die Heizmanschette (16) mittels eines Spannbügels (17) spannbar ist, dadurch gekennzeichnet, daß der Spannbügel (17) durch ein hydraulisch oder pneumatisch betätigbares Stellglied (34) verstellbar ist.

9. Vorrichtung nach einem der vorhergehenden Ansprüche 1 bis 8, dadurch gekennzeichnet, daß die Funktion der Bearbeitungsstation (4) über einen Rechner steuerbar ist.

10. Vorrichtung nach Anspruch 1, bei der die Bearbeitungsstation an Stützleisten festgelegt ist, die sich mittels Stützrollen an der Walze abstützen, dadurch gekennzeichnet, daß die Stützrollen als Stützkugeln (33) ausgebildet sind, die vorzugsweise in einer Halterung (32) gelagert sind.

11. Vorrichtung nach Anspruch 1, dadurch gekennzeichnet, daß die Bearbeitungsstation (4) mit einer Vakuumglocke versehen ist, mit der ein pastöser, auf die Schadstelle (7) aufgebrachter Flicken (15) vor einem Aushärter evakuierbar ist.

## Claims

1. Device for restoration of a damaged coating of a roller, fitted to a roller body by hot-vulcanisation, wherein a patch substantially filling the damaged area can be joined to the roller body, wherein a processing station (4) is provided, having means for mechanical removal of the damaged area (7), for cleaning the damaged area then laid bare, for joining the patch (15) then placed in the cleared area to the adjacent coating (20) and to the roller body (21) by means of hot-vulcanisation or hot pressing, and for mechanical processing of the coating (20) for the purpose of matching the measurements and surface finish of the coating (20).

2. Device according to claim 1, characterised in that a treatment installation for processing continuous webs (25), preferably every roller on the treatment installation (23), has at least one processing station (4) allocated to it.

3. Device according to claim 1, characterised in that a corona electrode is provided which is connected to a generator (28) producing a high voltage, and with which the cleared and/or restored area, including the adjacent area of the remaining coating (20) can be treated.

4. Device according to claim 2, characterised in that the processing station (4) is installed in a treatment installation (23) for treatment by corona of a continuous web (25).

5. Device according to claim 4, characterised in that the processing station (4) is mounted in a displaceable manner on stationary guides (24).

6. Device according to claim 3 or 4, characterised in that the corona electrode can be connected to the generator (28) of the treatment installation (23).

7. Device according to claim 1, in which the processing station (4) is provided with a heated collar which can be placed around the roller in the area of the patch (15), characterised in that inserts (35) are provided in the heated collar (16).

8. Device according to claim 7, wherein the heated collar (16) can be tensioned by means of a spring clip (17), characterised in that the spring clip (17) can be adjusted by a hydraulically or pneumatically actuated adjusting member (34).

9. Device according to one of the preceding claims 1 to 8, characterised in that the function of the processing station (4) can be controlled by a computer.

10. Device according to claim 1, wherein the processing station is set up on supporting rails which are supported on the rollers by means of supporting rollers, characterised in that the supporting rollers are configured as supporting balls (33), which are preferably mounted in a holder (32).

11. Device according to claim 1, characterised in that the processing station (4) is provided with a vacuum bell, with which a pasty patch (15) applied to the damaged area (7) can be evacuated before curing.

## Revendications

1. Dispositif pour rénover un revêtement endommagé d'un rouleau, appliqué par vulcanisation à chaud sur un corps de rouleau, un rapiéçage remplissant pour l'essentiel la partie endommagée pouvant être relié au corps de rouleau, une poste de travail (4) étant prévu, qui présente en outre des moyens pour éliminer mécaniquement la partie endommagée (7), pour nettoyer la zone de la partie endommagée ainsi mise à nue, pour lier le rapiéçage (15) posé sur la zone mise à nue au revêtement adjacent (20) et au corps de rouleau (21) par vulcanisation à chaud ou pressage à chaud, ainsi que pour usiner mécaniquement le revêtement (20) à des fins d'adaptation à la dimension et à la qualité de surface du revêtement (20).

2. Dispositif selon la revendication 1, caractérisé en ce qu'à une installation de traitement pour traiter des bandes de feuille (25), de préférence à chaque rouleau de l'installation, il est associé un poste de travail (4).

3. Dispositif selon la revendication 1, caractérisé en ce qu'une électrode corona est prévue, qui est reliée à un générateur (28) produisant une haute tension, et avec laquelle la Zone mise à nue et/ou rénovée, y compris la zone adjacente du reste du revêtement (20) peut être traitée.

4. Dispositif selon la revendication 2, caractérisé en ce que le poste de travail (4) est installé dans une installation de traitement (23) destinée au traitement corona d'une bande de feuille (25).

5. Dispositif selon la revendication 4, caractérisé en ce que le poste de travail (4) est monté mobile sur des guidages stationnaires (24).

6. Dispositif selon la revendication 3 ou 4, caractérisé en ce que l'électrode corona peut se raccorder au générateur (28) de l'installation de traitement (23).

7. Dispositif selon la revendication 1, dans lequel le poste de travail (4) est muni d'une manchette chauffante qui se pose autour du rouleau (6) au niveau du rapiéçage (15), caractérisé en ce que des inserts (35) sont prévus dans la manchette chauffante (16).

8. Dispositif selon la revendication 7, dans lequel la manchette chauffante (16) peut être tendue par un arceau de tension (17), caractérisé en ce que l'arceau de tension (17) peut être réglé par un élément de réglage (34) à commande hydraulique ou pneumatique.

9. Dispositif selon l'une des revendications précédentes 1 à 8, caractérisé en ce que le fonctionnement du poste de travail (4) peut être commandé depuis un calculateur.

10. Dispositif selon la revendication 1, dans lequel le poste de travail est fixé sur des barres d'appui qui s'appuient sur le rouleau au moyen de galets d'appui, caractérisé en ce que les galets d'appui sont conformés en billes d'appui (33), qui sont montées de préférence dans un support (32).

11. Dispositif selon la revendication 1, caractérisé en ce que le poste de travail (4) est muni d'une cloche à vide avec laquelle le rapiéçage pâteux (15) appliqué sur la partie endommagée (7) peut être mis sous vide avant un durcissement.
